(19) Europäisches Patentamt
European Patent Office
Office européen des brevets

(11) **EP 2 597 600 A1**

(12) **EUROPEAN PATENT APPLICATION**

(43) Date of publication:
**29.05.2013 Bulletin 2013/22**

(51) Int Cl.:
***G06Q 10/00*** *(2012.01)*

(21) Application number: **12192902.0**

(22) Date of filing: **16.11.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **21.11.2011 US 201113300935**<br><br>(71) Applicant: **GE Aviation Systems LLC**<br>**Grand Rapids, MI 49512-1991 (US)** | (72) Inventors:<br>• **Goebel, Christopher John**<br>**Grand Rapids, MI Michigan 49512 (US)**<br>• **Rossmiller, Matthew Dean**<br>**Grand Rapids, MI Michigan 49512 (US)**<br>• **Noorman, Michael David**<br>**Grand Rapids, MI Michigan 49512 (US)**<br><br>(74) Representative: **Williams, Andrew Richard**<br>**Global Patent Operation - Europe**<br>**GE International Inc**<br>**15 John Adam Street**<br>**London WC2N 6LU (GB)** |

(54) **Apparatus and method for automatic status check of an aircraft**

(57) A health management system for an aircraft capable of generating a status report and a method of providing such a status report from such a health management system of an aircraft, where the aircraft has multiple systems connected to a data network and the multiple systems output status messages regarding the multiple systems.

FIGURE 2

EP 2 597 600 A1

**Description**

BACKGROUND OF THE INVENTION

Contemporary aircraft may include an Onboard Maintenance System (OMS) or a health monitoring or Integrated Vehicle Health Management (IVHM) system to assist in diagnosing or predicting (prognosing) faults in the aircraft. Such current health management systems may collect various aircraft data and analyze the data to identify any irregularities or other signs of a fault or problem with the aircraft and report the same. To accomplish the health management function, the system may have to aggregate inputs from a variety of message sources, consolidate them, and send customized responses to one or more destinations. In such a system a problem may present itself in that small changes are often needed in the system, such as when a hardware element is upgraded, which requires reprogramming of the software used to implement the system. The entire software package must then be certified, which leads to significant costs and significant delays beyond the mere reprogramming.

BRIEF DESCRIPTION OF THE INVENTION

In one embodiment, a method of providing a status report from a health management system of an aircraft comprising multiple systems coupled to a data network and outputting status messages includes generating an input array from the status messages, loading at least some of the input array into a memory associated with a message processing unit, generating a configuration table including a plurality of equations corresponding to status requirements of the aircraft, with at least some of the equations having variables corresponding to the status messages, loading the equations into the message processing unit, executing the equations in the message processing unit using the input array for the variables to generate results to the equations, and generating a status report specified by the status requirements from the results of the executed equations.

In another embodiment, a health management system for an aircraft comprising multiple systems coupled to a data network and outputting status messages, the health management system includes a health management software application configured to receive the status messages and generate an input array, a configuration table comprising a plurality of equations corresponding to status requirements of the aircraft, and a report generator having a processing unit with corresponding memory, with the memory configured to receive at least a portion of the input array, and the processing unit configured to receive and execute the equations using the input array as variables to the equations to generate an output array indicative of a status report specified by the system requirements. The configuration table may be independent of the health management software application such that the configuration table may be updated without updating the health management software application.

BRIEF DESCRIPTION OF THE DRAWINGS

In the drawings:

Figure 1 is a schematic illustration of an aircraft having a health management system according to a first embodiment of the invention.

Figure 2 is a schematic illustration of the health management system of Figure 1.

Figure 3 is a schematic illustration of portions of the health management system illustrated in Figure 2.

DESCRIPTION OF EMBODIMENTS OF THE INVENTION

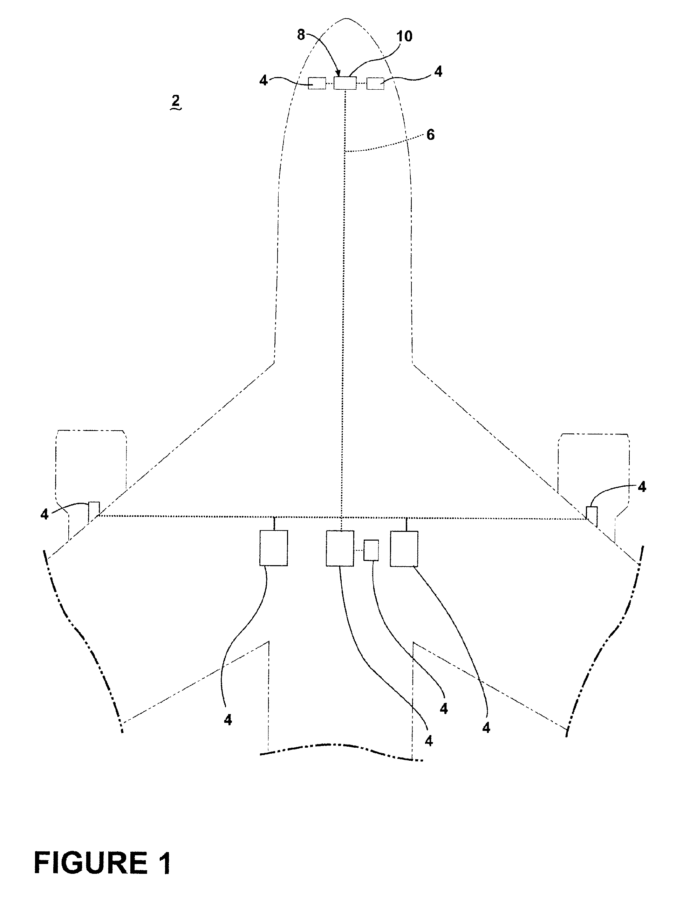

A brief overview of a simplified health management system will be helpful to discuss the environment of such a health management system. Figure 1 schematically illustrates a portion of an aircraft 2 having a plurality of aircraft member systems 4 that enable proper operation of the aircraft 2 and a data network 6 over which the plurality of aircraft member systems 4 may communicate with each other and a health management system 8. By way of non-limiting example, the aircraft member systems 4 may output status messages to the health management system 8. By way of non-limiting example the health management system may be an Integrated Vehicle Health Management (IVHM) system or other suitable system and may include an aircraft health management (AHM) computer 10 to assist in diagnosing or predicting faults in the aircraft 2.

The AHM computer 10 may include or be associated with, any suitable number of individual microprocessors, power supplies, storage devices, interface cards, and other standard components. The AHM computer 10 may receive inputs from any number of member systems or software programs responsible for managing the acquisition and storage of data and thus the AHM computer 10 is illustrated as being in communication with the plurality of aircraft member systems 4. During operation, the multiple aircraft member systems 4 may send status messages regarding at least some of the operational data of the multiple aircraft member systems 4 and the AHM computer 10 may make a determination of a health function of the aircraft 2 based on such data. During operation, analog inputs and analog outputs of the multiple aircraft member systems 4 may be monitored by the health management system 8 and the health management system 8 may make a determination of a health function of the aircraft 2 based on such data.

Generally, in a health management system there may be a very detailed set of requirements that concisely specifies how each item in the systems status report of the health management system is calculated. The complexity of these requirements can vary greatly, including factors such as the network-topology, device latency, and varying message rates.

The necessary data may be provided by the software messages, which may be used as inputs to the AHM from which a status report may be generated after applying the appropriate logic to the inputs. One embodiment of the invention proposes to convert the detailed requirements into Boolean logic that may be applied in equation form. A simple example of a systems requirement specifying a single bit in the system status report may include setting the Module_Left_A_Failure to active in the system status report when the Module_Left_A_Fan_Fault is active or when the Module_Left_A_Valve_Fault is active. In this example, a single bit in the status report is asserted when one of two status bits provided by status messages of aircraft member systems 4 are asserted. This requirement could also be expressed using Boolean logic with the following equation:

$$Y = A + B \qquad (1)$$

While this example only uses two inputs to generate a single output. The number of inputs for any given output can vary from one input to any number of inputs, the number of which may be limited by the amount of memory and processing power available.

It has been determined that the behavior may also be modeled as a set of transformations that map the input fields to the output fields. This may be accomplished by generating a unique index for every input and output field. Then using the transformations specified by the requirements to generate the output values using the current set of input values.

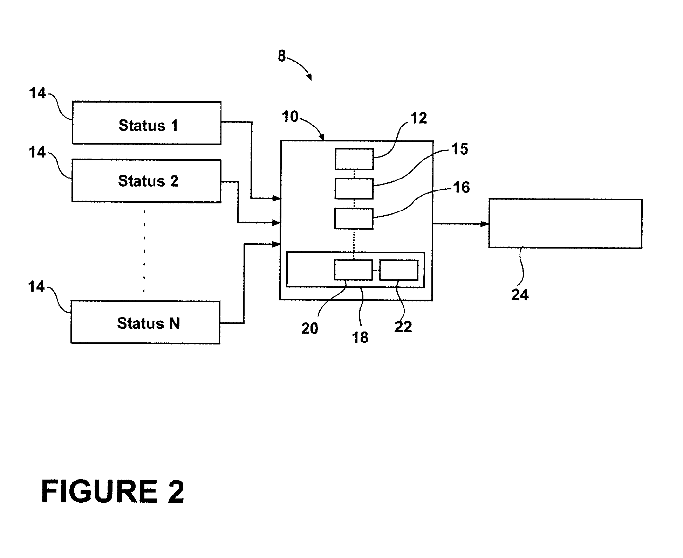

One embodiment that implements this approach is shown in Figure 2; it is contemplated that the health management system 8 may include a health management software application 12. The health management software application 12 may be provided on the AHM computer 10 and may communicate over the data network 6 and may be configured to receive status messages 14 from the aircraft member systems 4.

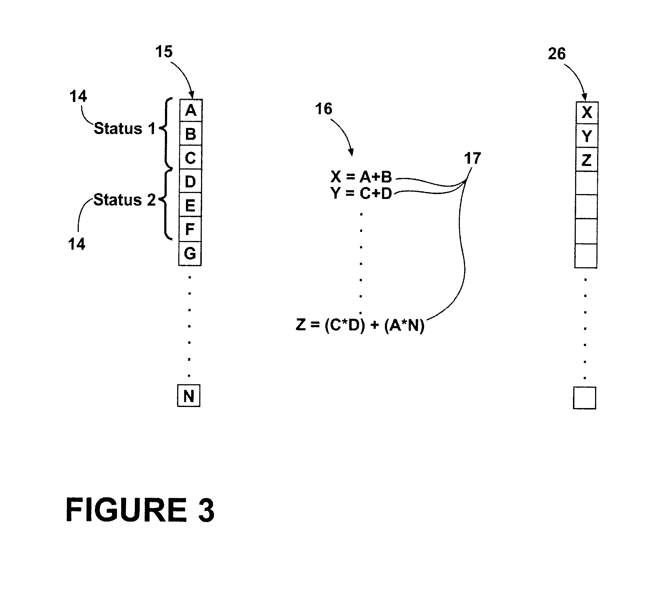

The health management software application 12 may also be configured to generate an input array 15 (Figure 3) from the received status messages 14. A configuration table 16 may also be included in the health management system 8 and may also be provided on the AHM computer 10 and may be independent of the health management software application 12 such that the configuration table 16 may be updated without updating the health management software application 12. It is contemplated that the configuration table 16 may include a plurality of equations 17 (Figure 3) corresponding to status requirements of the aircraft 2.

A report generator 18 may also be included in the health management system 8 and may also be provided on the AHM computer 10. The report generator 18 may include a message processing unit 20 with corresponding memory 22. The memory 22 may be configured to receive at least a portion of the input array 15 and the message processing unit 20 may be configured to receive and execute the equations in the configuration table 16 using the input array 15 as variables to the equations 17 to generate an output array 26 (Figure 3) indicative of a status report 24 specified by the system requirements, which may then be sent to a predetermined destination. While the above portions of the health management system have been described as being provided on the AHM computer 10 it is contemplated that they may alternatively be located on separate computers. Figure 3 more clearly illustrates the input array 15, the output array 26 indicative of the status report 24 and that the configuration table 16 may include a plurality of equations 17.

The above described embodiments are capable of performing a method of providing a status report 24 from the health management system 8. Such a method may include generating an input array 15 from the status messages 14, loading at least some of the input array 15 into the memory 22 associated with a message processing unit 20, generating a configuration table 16 comprising a plurality of equations 17 corresponding to status requirements of the aircraft 2, loading the equations 17 into the message processing unit 20, executing the equations 17 in the message processing unit 20 using the input array 15 for the variables to generate results to the equations 17, and generating a status report 24 of the status requirements from the results of the executed equations 17.

Generating the input array 15 may include the health management software application 12 communicating over the data network 6 to receive the status messages 14and generating the input array 15 from the received status messages 14. It is contemplated that the input array 15 will include a list of at least some of the status messages 14 and may include a list of all of the status messages 14. The input array 15 may be configured as a list of the status messages 14 in a predetermined order. For example, the input array 15 may be ordered by indexing each status message 14 in the input array 15 to a unique location in the input array 15.

Generating the input array 15 may include reading the status messages 14. This may be implemented using a BulkIO-style feature that can process the entire list of status messages 14 once per iteration. This allows the platform software to efficiently process the messages and minimize the latency required to receive new status messages 14. The status messages 14 may then be validated and the input array 15 may then be created from the valid status messages. The contents of the status messages 14 may be checked for validity. Further, any status messages 14 that have failed to arrive at the expected rate may be marked as invalid. It is contemplated that the status messages 14 may be unpacked and that the values may be placed in the input array 15. There are a number of techniques that can keep the unpack operation very small. In many systems it will be possible to read messages directly into the input array 15.

The configuration table 16 may be generated during the operation of the health management system 8 and may include a plurality of equations 17 corresponding to status requirements of the aircraft 2. At least some of the equations may have variables corresponding to the status messages received from the aircraft member systems 4. The equations 17 may represent Boolean logic decisions for the system requirements. It is contemplated that the equations 17 may be arranged for one-pass processing. By way of non-limiting example the equations 17 may be arranged for one-pass processing by writing the equations in reverse polish notation.

The configuration table 16 may be generated independent of the health management software application 12. It is contemplated that the input array 15 and configuration table 16 may be ordered such the variables for the equations 17 are available from the input array 15 upon the execution of the equations 17. It is contemplated that when an input to an equation is an output from another equation that the equations may be arranged in sequence such that one equation does not have to wait on the other.

Generating the status report 24 may include generating output messages from the results. It is contemplated that the output messages may be in an output array 26. Generating the status report 24 may also include packing the output messages. More specifically, data from the output array 26 may be packed into the outgoing messages.

As with the above described input arrays a 1-1 mapping may be established between the output array 26 and the body of the output message, greatly minimizing the overhead of the packing operation. The packed output messages may be then be sent to a predetermined destination. Again the availability of a BulkIO-style function can simplify the amount of work required to perform this operation.

The health management software application 12 may repeatedly poll the multiple systems 4 for the status messages 14 and the input array 15 may be repeatedly generated over time. It is contemplated that loading at least some of the input array 15, executing the equations 17, and generating the status report 24 may be done for each generation of the input array 15. It is contemplated that generating the configuration table 16 and loading the equations 17 may not be done for each generation of the input array 15.

It is contemplated that some of the equations 17 may refer to historical values for a single input message field. This allows output data to be specified based upon a changing sequence of values for a single input field. This behavior can be supported by adding an additional entry to the input array 15 for each of the samples identified in the equation. The notation for this can be expressed using a subscript to identify historic values for a given value of the input array. For example in the equation:

$$ X = A_0 + A_1 + A_2 \qquad (2) $$

the X may be computed by looking at the last 3 values of A. If any of them are true then X will be true. Because of the internal state necessary to support this functionality there may be an upper bound on the number of historical values that can be maintained by the system.

The ability to reference historical values also allows support for hysteresis and latched values. This functionality can be supported by incorporating previous values of an equation as inputs to the current value. With hysteresis after a value is asserted once it may stay asserted for additional specified iterations or a specified period and then be released. Values may be latched and held in the asserted state until is cleared by the specified external input. The hysteresis and latching techniques allows for the specification of how long a value should remain asserted, without requiring additional software to be developed or certified. An upper-bound on the number of historical values allowed by the configuration may be placed to ensure proper verification of each equation.

A beneficial effect is an increase in the flexibility of the health management system 8 and a minimization of the risk of a software change due to new or updated system requirements. The above described embodiments may support the process of receiving and sending a wide variety of messages and the method is flexible enough that the number and type of messages processed may be changed by updating the configuration table 16. Thus, the above described embodiments provide a variety of benefits including that changes may be made through reconfiguration instead of through additional development.

One advantage is that a variety of scheduling and configuration changes may be made with little or no retesting of the actual software. It is contemplated that only new and/or updated portions of the configuration may need to be retested. The basic design of the above described system may be adaptable to a wide variety message processing and message filtering applications. Further, the above described embodiments allow for the behavior of the application to be precisely modeled during the design phase allowing processor and memory requirements to be precisely calculated for any given configuration. This information simplifies the safety assessment process for mission-critical systems. For certain architectures the overall performance is also higher than that of traditional approaches because operations are encoded primarily as data elements instead of instruction op-codes. The encoding necessary for these data elements requires less storage than is necessary for equivalent encoding using a processor instruction set. This reduces the overall amount of information that needs to be loaded into the processor and can increase overall performance. Further, a commercial advantage is that the software may be reused in multiple systems without additional software development.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of providing a status report (24) from a health management system (18) of an aircraft (2) comprising multiple systems (4) coupled to a data network (6) and outputting status messages (14), the method comprising:

   generating an input array (15) from the status messages (14), with the input array comprising a list of at least some of the status messages (14);
   loading at least some of the input array (15) into a memory (22) associated with a message processing unit (20);
   generating a configuration table (16) comprising a plurality of equations (17) corresponding to status requirements of the aircraft (2), with at least some of the equations having variables corresponding to the status messages (14);
   loading the equations (17) into the message processing unit (20);
   executing the equations (17) in the message processing unit (20) using the input array (15) for the variables to generate results to the equations; and
   generating a status report (24) specified by the status requirements from the results of the executed equations.

2. The method of claim 1, wherein generating the input array (15) comprises a health management software application (12) communicating over the data network (6) to receive the status messages (14) and generate the input array (15) from the received status messages.

3. The method of claim 2, wherein the health management software application (12) repeatedly polls the multiple systems (4) for the status messages (14).

4. The method of either of claim 2 or 3, wherein the configuration table (16) is generated independent of the health management software application (12).

5. The method of any preceding claim, wherein the input array (15) and configuration table (16) are ordered such that the variables for the equations (17) are available from the input upon the execution of the equations.

6. The method of any preceding claim, wherein the input array (15) is ordered by indexing each status message (14) in the input array to a unique location in the array.

7. The method of claim 6, wherein the equations (17) are ordered such that variables are available upon execution of each of the equations.

8. The method of any preceding claim, wherein generating the input array (15) is repeatedly done over time.

9. The method of claim 8, wherein the loading at least some of the input array (15), executing the equations (17), and generating the status report (24) are done for each generation of the input array (15).

10. The method of claim 9, wherein the generating the configuration table (16) and loading the equations (17) is not done for each generation of the input array (15).

11. The method of any preceding claim, wherein the equations (17) represent Boolean logic decisions for the system requirements.

12. A health management system (8) for an aircraft (2) comprising multiple systems (4) coupled to a data network (6) and outputting status messages (14), the health management system comprising:

    a health management software application (12) communicating over the data network (6) and configured to receive the status messages (14) and generate an input array (15) from the received status messages, with the input array being configured as a list of the status messages in a predetermined order;
    a configuration table (16) comprising a plurality of equations (17) corresponding to status requirements of the aircraft (2), with at least some

**EP 2 597 600 A1**

of the equations having variables corresponding to the status messages; and

a report generator (18) having a processing unit (20) with corresponding memory (22), with the memory (22) configured to receive at least a portion of the input array (15), and the processing unit (20) configured to receive and execute the equations (17) using the input array (15) as variables to the equations to generate an output array (26) indicative of a status report (24) specified by the system requirements;

wherein the configuration table (16) is independent of the health management software application (12) such that the configuration table may be updated without updating the health management software application.

13. The health management system (8) of claim 12, wherein the health management software application (12) repeatedly polls the multiple systems (4) for the status messages (14).

14. The health management system (8) of either of claim 12 or 13, wherein the input array (15) and configuration table (16) are ordered such the variables for the equations (17) are available from the input array upon the execution of the equations.

15. The health management system (8) of any of claims 12 to 14, wherein the input array (15) is ordered by indexing each status message (14) in the input array (15) to a unique location in the array.

**FIGURE 1**

# FIGURE 2

15

14

Status 1 {

A
B
C

Status 2 {

D
E
F
G

14

.
.
.
.
.
.

N

16

X = A+B
Y = C+D

.
.
.
.

Z = (C*D) + (A*N)

17

26

X
Y
Z

.
.
.
.
.

# FIGURE 3

Europäisches
Patentamt

European
Patent Office

Office européen
des brevets

# EUROPEAN SEARCH REPORT

Application Number

EP 12 19 2902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/00 |

TECHNICAL FIELDS
SEARCHED (IPC)

G06Q

The present search report has been drawn up for all claims

| Place of search | Date of completion of the search | Examiner |
|---|---|---|
| Munich | 11 April 2013 | May, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)